# DEMANDE DE BREVET EUROPEEN

(11) **EP 1 213 084 A1**
(43) Date de publication de la demande: **12.06.2002**
(21) Numéro de dépôt: 01403153.8
(22) Date de dépôt: 06.12.2001
(51) Int. Cl.: B23K 9/10, B23K 9/09

(54) **Procédé et dispositif de soudage à l'arc avec électrode consommable**

(30) Priorité: 07.12.2000 FR 0015917
(71) Demandeur: L'air Liquide, S.A. à Directoire et Conseil de Surveillance pour l'Etude et l'Exploitation des Procédés Georges Claude, 75321 Paris Cedex 07 (FR); LA SOUDURE AUTOGENE FRANCAISE, F-75007 Paris (FR)
(72) Inventeur: Reymond, Christian, 95160 Montmorency (FR)
(74) Mandataire: Pittis, Olivier

(57) **Abrégé**

L'invention concerne un dispositif de commande d'un circuit d'alimentation pour soudure à l'arc, comportant :
- des moyens (26,28,32) pour détecter une striction de la veine de métal liquide en fin de régime de court-circuit,
- un transistor (24),
- des moyens (30-48) de commande du transistor pour commuter celui-ci en régime linéaire, lors de ou suite à la détection d'une striction de la veine de liquide, afin de réduire le courant entre l'électrode et la pièce.

## Description

L'invention concerne le domaine du soudage à l'arc mettant en oeuvre une électrode consommable dans laquelle circule un courant.

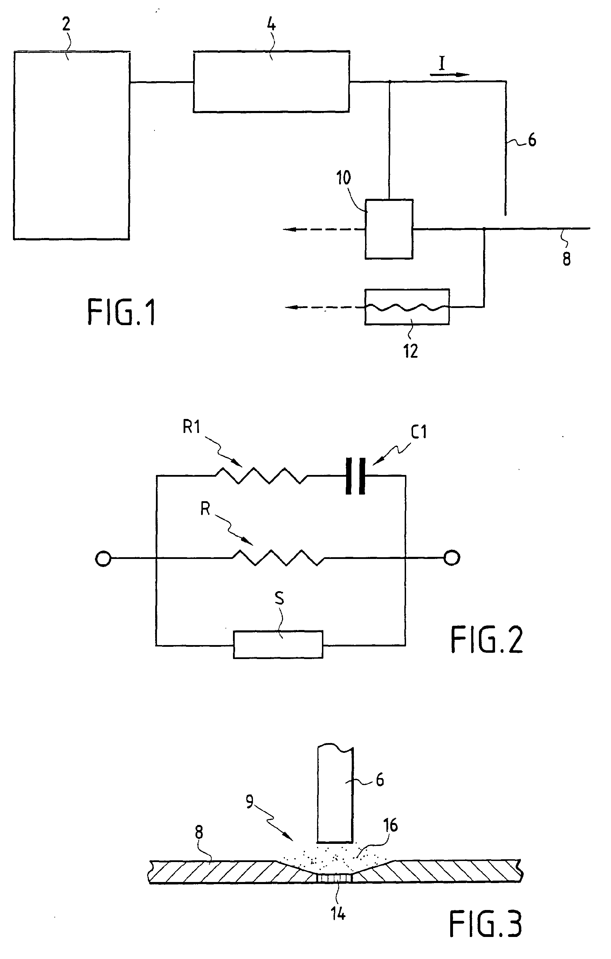

De manière schématique, et comme illustré sur la figure 1, un dispositif connu pour réaliser une soudure à l'arc comporte des moyens d'alimentation 2, un circuit de commande 4, et un fil métallique, ou électrode, 6, positionné au-dessus d'une pièce 8 sur laquelle une soudure doit être réalisée.

Les références 10 et 12 désignent des moyens de mesure du courant circulant dans la pièce 8 et de la tension entre cette pièce et l'électrode 6. Ces moyens permettent de commander les moyens d'alimentation 2 et/ou le circuit 4.

L'électrode 6 est une électrode consommable : le passage d'un courant, fourni par les moyens 2 et également contrôlé par le circuit 4, permet d'échauffer l'extrémité située en regard de la pièce ou du bain de soudure. Cette extrémité fond, ce qui provoque la formation d'une goutte qui est ensuite déposée sur la pièce.

Plus précisément, selon un mode de fonctionnement connu, le système évolue entre un régime d'arc, au cours duquel la tension entre l'extrémité du fil et la pièce est élevée tandis que le courant est relativement faible, et un régime de court-circuit pendant lequel le courant qui circule dans l'électrode, puis dans la soudure, est élevé, et la tension faible.

Lors d'un arc, l'extrémité de l'électrode fond. Il se forme une masse de métal fondu, suspendue à l'électrode et dirigée vers la pièce 8.

Cette masse de métal fondu atteint une certaine taille, tandis que le fil 6 avance progressivement vers la pièce 8. Un contact ayant la forme d'une veine de métal liquide, est donc établi entre l'extrémité du fil et la pièce, créant un court-circuit entre ces deux éléments.

Il en résulte une brusque chute de la tension et une augmentation très importante du courant I.

Il se produit ensuite un phénomène de pincement qui conduit à une striction de la veine de métal liquide entre l'extrémité du fil et le bain de soudure. Cette striction dépend du carré du courant.

Cette striction, ou col, finit par se rompre, libérant une grande quantité d'énergie si l'intensité du courant est importante à cet instant. Il en résulte des projections importantes du métal liquide, qui nuisent à la qualité de la soudure.

Divers documents ont proposé des dispositifs très variés afin de mieux contrôler le courant, et donc de limiter les projections se produisant lors de la rupture du col.

De telles techniques sont décrites, par exemple, dans les documents suivants : FR-A-2 666 261, US-A-3 809 853, US-A-4 546 234, EP-A-127 777, et EP-A-273 540.

Cependant, les dispositifs proposés par ces documents sont complexes.

Le document FR-A-2 666 261 décrit un circuit dans lequel une première réactance inductive, montée en parallèle au circuit de courant de soudage, permet de maintenir un courant de base I_{B}, qui, à son tour, permet d'entretenir l'arc entre l'électrode et la pièce, pendant et après le rétablissement de l'arc.

Le circuit de courant de soudage comporte lui-même une deuxième réactance inductive, faible par rapport à la précédente (par exemple dans un rapport de 1 à 1000), qui permet au courant de suivre un profil souhaité pour obtenir de faibles projections.

Le document US-A-3 809 853 limite les projections en limitant le courant d'arc à une valeur inférieure à sa valeur dite de courant de "choc" ou "surge current". En outre, un détecteur détecte les périodes d'arc et de court-circuit. Il permet de contrôler les conditions dans lesquelles s'établissent un arc. Il commande notamment des commutateurs qui sont également reliés à des minuteurs.

Un circuit de détection identifie les états d'arc et de court-circuit, et délivre une impulsion à des circuits de contrôle à chaque instant de transition d'un état de court-circuit à un état d'arc et réciproquement. Ainsi une impédance adaptée peut être commutée dans le circuit d'alimentation en fonction de l'état détecté.

Dans le document US-4 546 234 le contrôle du courant entre une électrode et une pièce comporte :
- en début de court-circuit, une première phase au cours de laquelle le courant de soudure est maintenu à un niveau relativement faible ID, afin de favoriser un fort contact entre la goutte de métal et le bain de soudure,
- une deuxième phase au cours de laquelle le courant de soudure est maintenu à un niveau relativement élevé I_{SP}, ce qui permet d'accélérer le transfert de métal liquide vers le bain de métal,
- une troisième phase au cours de laquelle le courant de soudure est ramené à un niveau relativement faible I_{RA}, lors de la détection d'un étranglement annonçant une rupture du métal fluide assurant le court-circuit entre l'électrode et la pièce ; la rapide décroissance permet d'éviter à la goutte de liquide d'être partiellement projetée lors du rétablissement de l'arc,
- une quatrième étape de maintien du courant à une 4^{ème} valeur I_{AP} relativement élevée, supérieure au courant moyen. Ceci favorise la naissance et la croissance d'une goutte de métal ; ceci permet également d'éviter l'apparition d'un court-circuit ;
- une cinquième étape de maintien du courant à une cinquième valeur I_{AB}, relativement faible, jusqu'à l'établissement d'un court-circuit, assurant des caractéristiques de courant substantiellement constantes indépendamment de variations dans la longueur de l'arc. Le maintien du courant à un niveau relativement faible permet d'initier le court-circuit entre la goutte de métal et le bain de métal fondu. Si ce niveau I_{AB} est trop élevé, l'établissement d'un court-circuit est retardé et la goutte de métal qui se forme croît jusqu'à devenir beaucoup trop importante.

Ces cinq étapes visent à atteindre trois conditions fondamentales : réduction de projections, stabilité de l'arc, meilleure allure du cordon de soudure.

Un circuit pour mettre en oeuvre ce procédé comporte un détecteur de tension de soudure, un détecteur de courant de soudure, un détecteur de court-circuit et un détecteur d'extinction d'arc.

Une solution souvent retenue est celle consistant à mettre en parallèle une résistance et un dispositif de commutation, comme décrit par exemple, dans EP-A-273 540.

Dans ce document, des moyens de détection détectent l'apparition d'un col ou d'une striction de la veine de métal liquide, et un signal commande alors le passage du dispositif de commutation dans un état non conducteur. La résistance force une décroissance rapide du courant et limite alors le courant de soudure à un niveau faible.

La rupture du col se produit donc à courant et énergie faibles. La tension s'accroît ensuite de nouveau, ce qui rend le dispositif de commutation de nouveau conducteur.

Par ailleurs, ce circuit permet de réduire les projections liées à des court-circuits brefs et intempestifs, en réduisant le courant à un niveau faible dès qu'un court-circuit est détecté. Si l'arc est alors rétabli, le courant retrouve sa valeur d'avant le court-circuit.

De manière pratique, et comme illustré sur la figure 2, la réalisation d'un tel montage nécessite en outre d'autres éléments, tels qu'un circuit R₁C₁ disposé en parallèle avec la résistance R, qui permet de protéger le système de commutation S, en général un transistor. Il en résulte un système plus complexe ainsi qu'une dissipation d'énergie supplémentaire.

Un autre problème est posé par la réalisation des soudures en deux étapes, comme illustré sur la figure 3. Sur cette figure, la référence 8 désigne toujours une pièce qui présente par exemple une gorge 9 devant être remplie par une soudure.

Un premier passage (passe de fond pour fondre la racine) permet de réaliser un premier cordon de soudure 14, à faible énergie et à faible vitesse d'avance du fil ou de l'électrode 6.

Dans une deuxième étape (passe de remplissage), on procède à la réalisation d'une deuxième soudure 16 mais cette fois à forte énergie et à vitesse d'avance d'électrode 6 importante. On est alors en régime de pulvérisation axiale. Ce régime de haute énergie se caractérise notamment par des intensités de courant de plusieurs centaines d'ampères, comprises par exemple entre 200 A ou 300 A et 400 ampères. Par ailleurs, il n'y a plus, au cours de ce régime, de phase d'arc et de court-circuit.

Dans ce régime, un dispositif, du type décrit ci-dessus en liaison avec la figure 2, devrait alors fonctionner de telle manière que l'élément de commutation S soit toujours fermé. Dans le cas d'un transistor, cela signifie que celui-ci doit toujours être traversé par un courant très élevé.

Une solution à ce problème consiste à court-circuiter le transistor ou le commutateur S, par exemple avec un contacteur. Mais cette solution reste chère et complexe, le contacteur se rajoutant à la résistance R et aux éléments R₁ et C₁ de la figure 2.

Il se pose donc le problème de trouver un dispositif d'alimentation en courant qui permette de simplifier les dispositifs antérieurs.

Il se pose également le problème de trouver un dispositif d'alimentation en courant qui puisse fonctionner suivant deux régimes, d'une part un régime d'arc et de court-circuit (à faible énergie), et d'autre part en régime de pulvérisation axiale à forte énergie.

L'invention propose un dispositif de commande d'un circuit d'alimentation pour soudure à l'arc, comportant un transistor, des moyens de détection du courant et de la tension de soudage, permettant de détecter une striction de la veine de métal liquide, avant ou juste avant le réamorçage de l'arc, en fin de période de court-circuit, et des moyens de commande du transistor pour commuter celui-ci en régime linéaire lors de, ou suite à, la détection de cette striction.

L'invention concerne donc un dispositif de commande d'un circuit d'alimentation pour soudure à l'arc, ladite soudure étant du type évoluant entre un régime d'arc et un régime de court-circuit, et mettant en oeuvre une électrode consommable, à positionner au-dessus d'une pièce sur laquelle une soudure est à réaliser, ledit dispositif de commande comportant :
- des moyens pour détecter une striction de la veine de métal liquide, avant le réamorçage de l'arc, en fin de période de court-circuit,
- un transistor,
- des moyens de commande du transistor pour commuter celui-ci en régime linéaire, lors de, ou suite à, la détection de la striction, afin de réduire le courant entre l'électrode et la pièce. Le courant est réduit à une valeur relativement faible, par exemple de l'ordre de 40 A, ou comprise entre 20 A et 50 A.

Le transistor est par exemple un transistor bipolaire ou IGBT ou MOS, capable de travailler en régime linéaire dans son aire de sécurité.

Selon un mode de réalisation, des moyens permettent de maintenir la tension aux bornes du transistor à une certaine valeur fixe, par exemple 150 volts, ou plus (200 volts ou 400 volts), évitant ainsi que cette tension ne devienne trop élevée pour le transistor.

Selon un autre aspect de l'invention, une source auxiliaire de courant peut être prévue, qui fournit un courant prédéterminé lorsque le courant entre l'électrode et la pièce a été ramené à une valeur faible ou nulle.

La source auxiliaire fournit un courant pour permettre le rétablissement de l'arc en fin de court-circuit.

L'invention concerne également un dispositif de commande de l'alimentation d'un système de soudure à l'arc, ladite soudure étant du type évoluant entre un régime d'arc et un régime de court-circuit, et mettant en oeuvre une électrode consommable à positionner au-dessus d'une pièce sur laquelle une soudure est à réaliser, ledit dispositif de commande comportant :
- des moyens d'alimentation, comportant notamment au moins une inductance,
- un transistor, pour, ou dimensionné de manière à, dissiper, l'énergie stockée en fin de court-circuit dans l'inductance.

L'énergie dissipée en régime de court-circuit est par exemple comprise entre 200 W et 600 W.

Avantageusement, un dispositif selon l'invention peut être monté sans circuit RC parallèle.

L'invention concerne également un procédé de soudure dans lequel une électrode est positionnée au-dessus d'une pièce sur laquelle une première soudure (ou passe de fond) a été réalisée, comportant une étape de soudure en régime de pulvérisation axiale au cours de laquelle :
- on alimente en énergie un circuit comportant une inductance, un transistor, l'électrode et là pièce,
- on maintient le transistor fermé pendant le régime de pulvérisation axiale.

Un courant de forte intensité, par exemple comprise entre 200 A et 500 A, peut être fourni dans le circuit lors du régime de pulvérisation axiale.

L'invention concerne également un procédé de soudure dans lequel une électrode est positionnée au-dessus d'une pièce sur laquelle la soudure est réalisée, ce procédé comportant :
- une première étape de réalisation d'une première soudure à l'arc, mettant en oeuvre alternativement un régime d'arc et un régime de court-circuit,
- une deuxième étape, de réalisation d'une deuxième soudure, mettant en oeuvre un régime de pulvérisation axiale au cours duquel :
   * on alimente en énergie un circuit comportant une inductance, un transistor, l'électrode et la pièce,
   * on maintient le transistor fermé pendant le régime de pulvérisation axiale.

Lors de la première étape de réalisation d'une première soudure à l'arc, peuvent être mis en oeuvre, alternativement, un régime d'arc et un régime de court-circuit, une veine de métal liquide établissant le court-circuit entre l'électrode consommable et la pièce, avec:
- la détection d'une striction de la veine liquide, en fin de régime de court-circuit,
- suite à cette détection, la commutation d'un transistor, en régime linéaire, afin de réduire le courant à une valeur relativement faible, par exemple comprise entre 20 A et 50 A, par exemple 40 A.

Les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels:
- la figure 1 représente schématiquement un dispositif de soudure à l'arc,
- la figure 2 représente schématiquement un système connu pour une alimentation d'une électrode de soudure à l'arc,
- la figure 3 représente un procédé de soudure en deux étapes, à faible puis à forte énergie,
- la figure 4 représente un mode de réalisation d'un circuit selon l'invention,
- la figure 5 représente schématiquement l'évolution temporelle de diverses grandeurs électriques du circuit,
- la figure 6 représente un autre mode de réalisation de l'invention, avec source auxiliaire.

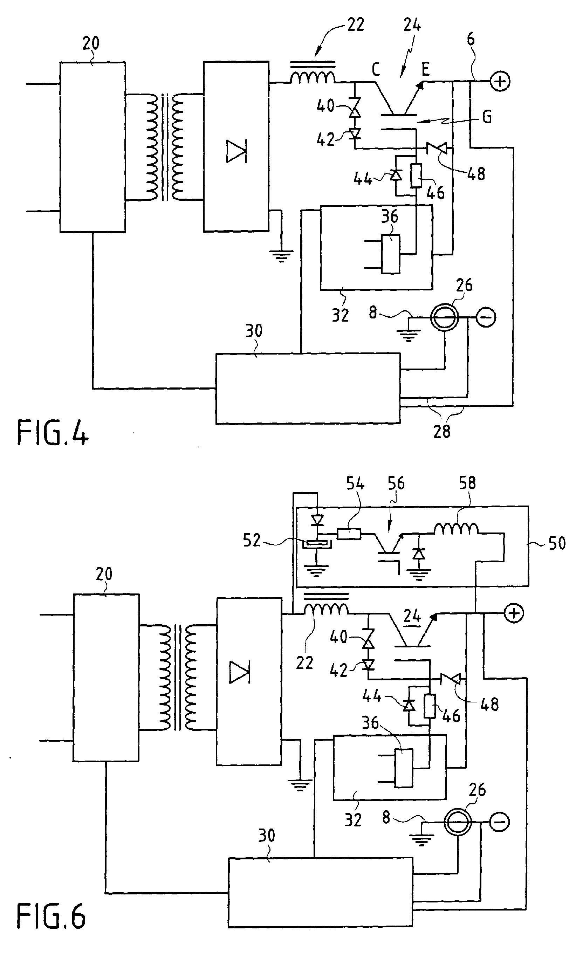

Un mode de réalisation va être donné en liaison avec la figure 4. Sur cette figure les références 6 et 8 désignent, comme sur la figure 1, une électrode consommable et une pièce sur laquelle la soudure doit être réalisée.

La référence 20 désigne des moyens d'alimentation en énergie, par exemple un convertisseur tel qu'un bloc onduleur ou hacheur alimentant le circuit de soudure en énergie électrique.

Le circuit comporte un élément d'induction 22, un transistor 24, des moyens 26 de mesure du courant d'arc, des moyens 28 de mesure de la tension d'arc, des moyens de commande 30, 32 permettant de commander le transistor 24 ou à la fois le transistor 24 et le bloc onduleur 20.

Le passage d'un courant dans l'électrode 6 permet d'échauffer l'extrémité située en regard de la pièce ou du bain de soudure. Cette extrémité fond, ce qui provoque la formation d'une goutte qui est ensuite déposée sur la pièce ou la soudure déjà présente sur cette pièce.

Plus précisément, selon un mode de fonctionnement connu, le système peut évoluer entre un régime d'arc, au cours duquel la tension entre l'extrémité du fil et la pièce est élevée tandis que le courant est faible, et un régime de court-circuit pendant lequel le courant qui circule dans l'électrode, puis dans la soudure, est élevé, et la tension faible.

L'évolution des régimes d'arc et de court-circuit (avec, successivement: fusion de l'extrémité de l'électrode, contact entre extrémité du fil et soudure, pincement, rupture du col) a été décrite ci-dessus dans l'introduction à la présente demande. En particulier, une veine de métal liquide établit le court-circuit entre l'électrode et la pièce, une striction de cette veine apparaissant en fin de phase de court-circuit.

Selon un mode de réalisation de l'invention, les moyens de commande 32 comportent notamment une porte 36 qui délivre un "1" logique si le courant d'arc mesuré I_{ARC} est inférieur à une valeur minimum fixée (par exemple : 50 ampères), ou bien si le système fonctionne en régime d'arc. Dans les deux cas, le transistor 24 est commandé à l'état passant.

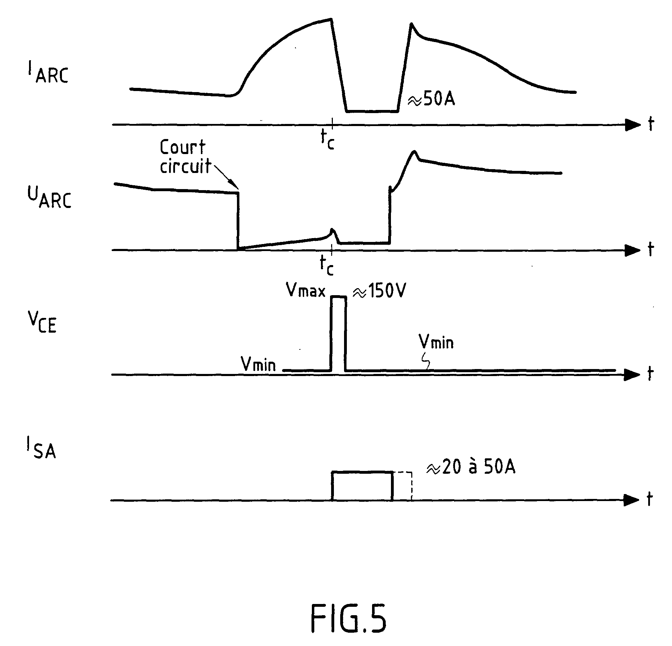

Sur la figure 5, I_{ARC} et V_{ARC} représentent respectivement l'évolution temporelle du courant et de la tension entre l'électrode et la pièce (courant et tension de soudage), et V_{CE} représente l'évolution de la tension aux bornes du transistor 24.

Les moyens 26 et 28 permettent d'identifier ou de détecter la formation d'un col, ou d'une striction de la veine liquide, en fin de régime de court-circuit. Comme illustré sur la figure 5, lors de cette détection (à l'instant t_{c}), ou suite à cette détection, le transistor est mis en régime linéaire avec une tension V_{CE} = Vₘₐₓ imposée à ses bornes (ici : Vₘₐₓ = 150 volts). Autrement dit, lors de, ou suite à, la détection de la striction de la veine de métal liquide, donc du réamorçage imminent de l'arc, en fin de court-circuit, le transistor est commandé en régime linéaire, donc entre son point de saturation et son point de blocage, la tension collecteur-émetteur étant ramenée à une valeur permettant de forcer une décroissance rapide du courant d'arc. Le transistor ne fonctionne alors pas en régime d'interrupteur.

Après réamorçage du régime d'arc, le transistor est rendu normalement conducteur (il est fermé), avec une faible tension Vₘᵢₙ à ses bornes, par exemple comprise entre 1 et 4 volts, par exemple de l'ordre de 2 volts.

Lors du rétablissement de l'arc, le transistor est donc redevenu normalement conducteur et est à l'état passant.

Le transistor 24 est commandé en régime linéaire dès la, ou suite à la détection de la striction, et le courant décroît.

Plus précisément, selon un mode de réalisation, le bloc électronique 30 commande alors les moyens d'alimentation 20 de manière à faire fournir par ces moyens un courant faible, de l'ordre de 20 A à 50 A. Dès que le courant (mesuré par les moyens 26) est inférieur à 50 A, le transistor 24 est commandé à l'état passant (avec une tension à ses bornes de l'ordre de 2 V). Ce mode de réalisation ne nécessite ni source auxiliaire, ni résistance en parallèle avec le transistor 24.

Par conséquent, selon l'invention, toutes les variations dues au régime arc-court-circuit (donc en régime de "faible énergie") sont imposées au transistor.

Le dispositif selon l'invention est protégé des surtensions puisque la tension aux bornes du transistor est écrêtée à, par exemple, V_{MAX} (150 volts dans l'exemple de la figure 5), ce qui permet notamment de supprimer les réseaux d'aide à la commutation, tels que le circuit R₁C₁ de la figure 2.

Par ailleurs, l'énergie de l'inductance 22 est dissipée dans le transistor 24, et non pas dans une impédance placée en parallèle avec celui-ci : le dispositif est donc simplifié. Le dispositif selon l'invention permet donc de travailler avec, pour seuls composants, un transistor, et des moyens de commande de ce transistor.

Le mode de fonctionnement du dispositif selon l'invention se distingue des modes de fonctionnement connus. Notamment, lors de la détection de la striction de la veine de métal, le transistor est, selon l'invention, maintenu fermé et en régime linéaire, avec une tension V_{MAX} à ses bornes (qui impose une chute du courant I_{ARC}), alors que, dans les modes de fonctionnement connus, le transistor était ouvert.

Le transistor 24 est de préférence surdimensionné, afin de dissiper, en régime d'arc et de court-circuit, l'énergie stockée dans les inductances en fin de court-circuit. Cette énergie peut être de l'ordre de quelques centaines de Watt, par exemple comprise entre 200 W et 600 W. Ceci n'est pas pénalisant, car ce même surdimensionnement permet de travailler à une intensité supérieure à celle utilisée en régime arc-court-circuit, notamment pendant les régimes sans alternances d'arcs et de courts-circuits que sont les régimes pulsés ou en pulvérisation axiale.

On peut donc procéder, avec un tel dispositif, à une soudure en régime de pulvérisation axiale ou de haute énergie, avec une intensité de courant comprise, par exemple, entre 200 et 400 ampères. Au cours d'un tel régime, le transistor est maintenu fermé et est traversé par un courant très élevé (de l'ordre de quelques centaines d'ampères, par exemple 200 A à 400 A ou 300 A à 400 A).

On peut également procéder, comme illustré sur la figure 3, à une soudure en deux étapes, la première étape mettant en oeuvre un premier passage de l'électrode, à une première énergie, faible, et à une première vitesse, faible, d'avance du fil 6, la deuxième étape étant réalisée en régime de pulvérisation axiale, à une deuxième énergie, forte ou supérieure à la première énergie, et à vitesse d'avance d'électrode forte ou supérieure à la première vitesse d'avance. Lors de la première étape, le dispositif de commande fonctionne par exemple tel que décrit ci-dessus, avec commande du transistor 24 en régime linéaire.

Dans le mode de réalisation de la figure 4, les moyens de commutation du transistor comportent en outre une première diode Zener 40 de tension Zener V_{z1} (selon l'exemple donné : V_{z1} = 150 volts), une deuxième diode 42, une troisième diode 44, une résistance 46 et une quatrième diode 48, elle aussi de type Zener, de tension Zener V_{z2} (par exemple, V_{z2} = 15 volts), montés de la manière indiquée sur la figure.

Lorsque le transistor est à l'état passant et normalement conducteur (phase d'arc), la tension V_{CE} entre le collecteur et l'émetteur du transistor est faible, par exemple de l'ordre de 2 volts.

Lorsque les moyens 32, 36 délivrent une commande logique "0", le transistor est ouvert (c'est le cas notamment en régime de court-circuit, voir figure 5). La diode 48 ne conduit pas, la tension à ses bornes étant inférieure à sa tension Zener, qui est de 15 volts dans l'exemple donné. Toute surtension entraîne la commutation de la diode Zener 40. Un courant passant dans la diode 42 tend à établir une chute de tension aux bornes de la résistance 46, ce qui permet d'ajuster automatiquement la commande de la grille G du transistor 24.

Selon un autre mode de réalisation, l'électronique de commande 30 ne réagit pas sur les moyens d'alimentation 20. Le transistor 24 passe donc en régime linéaire dès détection de la striction de la veine de métal liquide, et est maintenu dans ce régime jusqu'au rétablissement de l'arc. Puis, il est rendu normalement conducteur, avec une tension à ses bornes de l'ordre de 2 V. Afin que l'arc se rétablisse normalement, notamment en régime MIG/MAG (régime d'électrode 6 dévidée), il est préférable qu'il y ait au minimum un courant de 20 A à 50 A. A cette fin, on peut fournir ce courant soit à l'aide d'une source auxiliaire, soit à l'aide d'une résistance montée en parallèle au transistor 24.

La figure 6 représente les mêmes éléments que sur la figure 4, mais avec en outre une source auxiliaire 50, constituée d'une capacité 52, d'une résistance 54, d'un transistor 56 et d'une bobine 58. La capacité 52 est chargée lorsque le bloc onduleur 20 fonctionne. Elle permet d'assurer un courant de fond.

Sur la figure 5, I_{SA} représente l'évolution temporelle du courant fourni par la source auxiliaire 50.

Un courant de 20 A à 50 A est fourni par la source auxiliaire, permettant de rétablir l'arc. Une fois l'arc rétabli, le transistor peut être rendu passant, avec une tension à ses bornes de l'ordre de 2 V.

Lorsque l'arc est rétabli, le transistor 24 peut être commandé à l'état passant et la source auxiliaire 50 peut être rendue inactive.

Selon ce mode de réalisation, on peut supprimer la mesure de courant à l'aide des moyens 26.

Dans les divers modes de réalisation indiqués ci-dessus, la tension aux bornes du transistor 24 est écrêtée à une valeur V_{MAX} comprise, par exemple, entre 100 V et 600 V ou entre 200 V et 500 V. Le transistor a donc une tension de claquage supérieure à V_{MAX}, donc au moins comprise entre ces valeurs.

Le dispositif et le procédé selon l'invention permettent de supprimer les projections de métal lors d'un régime d'arc et de court-circuit. Ils permettent également de moins perturber le bain de soudure, par un meilleur contrôle des paramètres de soudure.

## Revendications

1. Dispositif de commande d'un circuit d'alimentation pour soudure à l'arc, ladite soudure étant du type évoluant entre un régime d'arc et un régime de court-circuit, et mettant en oeuvre une électrode consommable (6), à positionner au-dessus d'une pièce (8) sur laquelle une soudure est à réaliser, une veine de métal liquide établissant le court-circuit entre l'électrode consommable et la pièce, ledit dispositif de commande comportant au moins :
- des moyens (26, 28, 32) pour détecter une striction de la veine de métal liquide, pendant ou en fin de régime de court-circuit,
- un transistor (24),
- des moyens (30-48) de commande du transistor pour commuter celui-ci en régime linéaire, lors d'une détection d'une striction de la veine de métal liquide, afin de réduire le courant, entre l'électrode (6) et la pièce (8).

2. Dispositif selon la revendication 1, **caractérisé en ce que** le transistor (24) est un transistor bipolaire ou IGBT ou MOS.

3. Dispositif selon l'une des revendications 1 ou 2, **caractérisé en ce que** les moyens (30-48) de commande du transistor pour commuter celui-ci en régime linéaire comporte des moyens (40) pour écrêter la tension aux bornes du transistor et la maintenir à une valeur seuil prédéterminée lorsqu'elle dépasse cette valeur seuil.

4. Dispositif selon la revendication 3, **caractérisé en ce que** la valeur seuil est comprise entre 100 V et 300 V.

5. Dispositif selon l'une des revendications 1 à 4, **caractérisé en ce que** les moyens de commande du transistor (24) rendent celui-ci normalement conducteur ou passant pendant le régime d'arc.

6. Dispositif selon la revendication 5, **caractérisé en ce qu'**il comporte des moyens d'alimentation en courant, fournissant un courant d'une valeur maximale prédéterminée après commutation du transistor en régime linéaire, des moyens de mesure du courant d'arc, des moyens de commande du transistor (24) rendant celui-ci normalement conducteur ou passant dès que le courant d'arc a une valeur inférieure à ladite valeur maximale prédéterminée.

7. Dispositif selon la revendication 6, **caractérisé en ce que** ladite valeur maximale prédéterminée est inférieure à 50 A.

8. Dispositif selon la revendication 5, **caractérisé en ce qu'**il comporte, en outre, des moyens (50) pour fournir un courant de réamorçage de l'arc, les moyens de commande du transistor maintenant celui-ci en régime linéaire jusqu'à un réamorçage du régime d'arc.

9. Dispositif selon la revendication 8, **caractérisé en ce qu'**il comporte une source auxiliaire de courant (50) pour fournir un courant de réamorçage de l'arc.

10. Dispositif selon la revendication 8, **caractérisé en ce qu'**une résistance est montée en parallèle au transistor (24).

11. Dispositif de commande de l'alimentation d'un système de soudure à l'arc, ladite soudure étant du type évoluant entre un régime d'arc et un régime de court-circuit, et mettant en oeuvre une électrode consommable (6), à positionner au-dessus d'une pièce (8) sur laquelle une soudure est à réaliser, ledit dispositif de commande comportant au moins :
- des moyens d'alimentation (20,22), comportant notamment au moins une inductance (22),
- un transistor pour, ou dimensionné de manière à, dissiper, en régime de court-circuit, une énergie stockée dans l'inductance (22).

12. Dispositif selon la revendication 11, l'énergie dissipée en régime de court-circuit est comprise entre 200 W et 600 W.

13. Dispositif selon l'une des revendication 1 à 12, **caractérisé en ce que** le transistor est monté sans circuit RC parallèle.

14. Procédé de soudure à l'arc dans lequel la soudure évolue entre un régime d'arc et un régime de court-circuit, une électrode (6) étant positionnée au-dessus d'une pièce (8) sur laquelle la soudure est réalisée, une veine de métal liquide établissant le court-circuit entre l'électrode consommable et la pièce, le procédé comportant :
- la détection d'une striction de la veine de métal liquide, pendant ou en fin de régime de court-circuit,
- suite à cette détection, la commutation d'un transistor (24), en régime linéaire, afin de réduire le courant, entre l'électrode (6) et la pièce (8).

15. Procédé selon la revendication 14, **caractérisé en ce que** la commutation du transistor (24) est réalisée en écrêtant la tension à ses bornes lorsque celle-ci dépasse une valeur seuil.

16. Procédé selon la revendication 15, **caractérisé en ce que** la valeur seuil est comprise entre 100 V et 600 V.

17. Procédé selon l'une des revendications 14 à 16, **caractérisé en ce que** les moyens de commande du transistor (24) rendent celui-ci normalement conducteur ou passant pendant le régime d'arc.

18. Procédé selon la revendication 17, **caractérisé en ce que** des moyens d'alimentation en courant fournissent un courant d'une valeur maximale prédéterminée après commutation du transistor en régime linéaire, des moyens de mesure du courant mesurent un courant d'arc, des moyens de commande du transistor (24) rendent celui-ci normalement conducteur ou passant dès que le courant d'arc a une valeur inférieure à ladite valeur maximale prédéterminée.

19. Procédé selon la revendication 18, **caractérisé en ce que** ladite valeur maximale prédéterminée est inférieure à 50 A.

20. Procédé selon la revendication 17, **caractérisé en ce que** des moyens (50) fournissent un courant de réamorçage de l'arc, les moyens de commande du transistor maintenant celui-ci en régime linéaire jusqu'à un réamorçage du régime d'arc.

21. Procédé selon la revendication 20, **caractérisé en ce qu'**une source auxiliaire de courant (50) fournit un courant de réamorçage de l'arc.

22. Procédé selon la revendication 20, **caractérisé en ce qu'**une résistance est montée en parallèle au transistor (24).

23. Procédé selon l'une des revendications 14 à 22, **caractérisé en ce qu'**un circuit d'alimentation de la soudure en énergie comporte une inductance (22), et **en ce que** l'énergie stockée, dans cette inductance (22), est dissipée dans le transistor (24) en régime de court-circuit.

24. Procédé de soudure dans lequel une électrode (6) est positionnée au-dessus d'une pièce (8) sur laquelle une première soudure a été réalisée, comportant une étape de soudure en régime de pulvérisation axiale au cours de laquelle :
- on alimente en énergie un circuit comportant une inductance (22), un transistor (24), l'électrode (6) et la pièce (8),
- on maintient le transistor (24) fermé pendant le régime de pulvérisation axiale.

25. Procédé selon la revendication 24, **caractérisé en ce qu'**un courant d'intensité comprise entre 200 A et 400 A est fourni dans le circuit lors du régime de pulvérisation axiale.

26. Procédé de soudure dans lequel une électrode (6) est positionnée au-dessus d'une pièce (8) sur laquelle la soudure est réalisée, ce procédé comportant :
- une première étape de réalisation d'une première soudure (14) à l'arc, mettant en oeuvre alternativement un régime d'arc et un régime de court-circuit,
- une deuxième étape, de réalisation d'une deuxième soudure (16), mettant en oeuvre un régime de pulvérisation axiale au cours duquel :
* on alimente en énergie un circuit comportant une inductance (22), un transistor (24), l'électrode (6) et la pièce (8),
* on maintient le transistor (24) fermé pendant le régime de pulvérisation axiale.

27. Procédé selon la revendication 26, dans lequel la première étape de réalisation d'une première soudure (14) à l'arc, mettant en oeuvre alternativement un régime d'arc et un régime de court-circuit, une veine de métal liquide établissant le court-circuit entre l'électrode consommable et la pièce, comporte :
- la détection d'une striction de la veine liquide, pendant ou en fin de régime de court-circuit,
- suite à cette détection, la commutation d'un transistor (24) en régime linéaire, afin de réduire le courant, entre l'électrode (6) et la pièce (8).

28. Procédé selon l'une des revendications 24 à 27, **caractérisé en ce qu'**un courant d'intensité comprise entre 200 A et 400 A est fourni dans le circuit, lors de la deuxième étape.
